# NEW EUROPEAN PATENT SPECIFICATION

(11) **EP 0 340 850 B2**
(45) Date of publication and mention of the opposition decision: **17.01.1996**
(45) Mention of the grant of the patent: 29.07.1992
(21) Application number: 89201083.6
(22) Date of filing: 25.04.1989
(51) Int. Cl.: B29C 41/04

(54) **Method and apparatus for attaching an insert in a hollow body**
Verfahren und Vorrichtung zum Befestigen eines Einsatzes in einem Hohlkörper
Procédé et appareil pour attacher une pièce à insérer dans un corps creux

(30) Priority: 06.05.1988 BE 8800508
(43) Date of publication of application: 08.11.1989
(73) Proprietor: STRUCTURAL EUROPE, B-2410 Herentals (BE)
(72) Inventor: Liekens, Michel, B-2440 Geel (BE)
(74) Representative: Callewaert, Jean

(56) References cited:
- EP-A- 0 046 822
- EP-A- 0 255 043
- AT-B- 227 427
- DE-A- 1 930 948
- DE-A- 2 065 728
- DE-A- 2 758 963
- DE-A- 3 042 926
- DE-A- 3 223 081
- DE-U- 1 852 986
- Kunststoffe 67 (1977) 10, pp 598 - 601
- Kunststoffe magazine (1976)1,pp 15 +17

## Description

The invention concerns a method for attaching an insert, as defined in the preamble of claim 1.

With present methods of producing hollow bodies, such as drums or tanks, the hollow body is usually finished completely and the insert is then attached using screws, sometimes with a sealing ring, or it is welded or glued to the outside of the hollow body over an opening provided in the wall of the hollow body for this purpose. European patent application 0046822 is relating to a process for fixing a foot-plate at the lower free end of a lamppost which is manufactured according to the centrifugation technique.

These known methods are not only expensive owing to the important manual labour and expertise required to attach the insert to the hollow body, manufactured according to the so-called "rotation casting technique" or "Rock and Roll casting technique", but also often has the disadvantage that the attaching of the insert does not provide enough security as regards the thightness between the hollow body and the insert itself, especially if this hollow body is to be subjected to certain internal pressure during use.

German patent application 2758963 discloses a method for fixing an insert in a hollow body according the so called "blow molding technique".

The invention is principally designed to eliminate the disadvantages of the known methods and provide a very simple, rapid, efficient and largely automatic method of attaching inserts of mainly thermoplastic material and of widely diverse shapes and sizes to the wall of hollow bodies in a way which will prove both sturdy and completely tight.

For this prupose according to the invention, the insert is first of all placed in the mould at a specific distance from the still-molten thermoplastic material so as to ensure that it suffers no substantial deformation in the presence of the latter, and at a second stage, while the thermoplastic material of which the hollow body is to be made is solidifying, the insert is brought into contact with this thermoplastic material whilst it is still sufficiently soft so that the said material fuses to form substantially a whole with the insert, after which, at a third stage, once the thermplastic has almost completely solidfied, the hollow body with the attached insert is removed from the mould.

Advantageously, the insert is held in place during the first and second stages of the operation at least partly by means of at least one removable supporting element which fits closely against the insert in order to ensure that the latter does not suffer any significant deformation during these two stages.

The invention also concerns an apparatus for the application of the method described above.

This apparatus is characterized by the fact that it comprises a mechanism which makes it possible to mount the insert in a detachable manner inside the mould in which the at least partly hollow body can be formed, whereby, in a first position of the mechanism,the insert is maintained at a specific distance from the inside wall of the mould by the mechanism and, in a second position, the insert is brought into close contact with the body of thermoplastic material which is formed against this inner wall, means being provided which, in the first position, allow to adjust the insert in the mould in such a way as to ensure that it suffers no substantial deformation in the presence of the still-molten thermoplastic material and whereby the mechanism can be detached from the insert once the latter has formed a whole with the solidified thermoplastic material.

In a more specific embodiment of the apparatus according to the invention, the mechanism comprises, on the one hand, a frame which can be fixe firmly to the outside of the mould, dose to the place where the insert is to be attached to the body, around an opening provided in the mould, and, on the other hand, a moveable element on this frame with a guiding piece which can be slid into this opening, and a support which passes through this guiding piece on which the insert can be mounted, so that, when the part which moves on the frame is in the first position, this insert may be held in the mould at a specific distance from its inner wall and, when in the second position, this insert is moved up against the inner wall.

In a particular effective embodiment of the invention, the aforementioned support includes a rod which projects from the guiding piece substantially in line with the axis of the opening, and on which the guiding piece and the insert, by means of at least one supporting element for this insert, may be mounted, closely to each other in a substantially co-axial relationship, together with the guiding piece and insert mounted on it, being axially mounted on the frame in such a way that it can be moved between the first and second positions.

Other special features and advantages of the invention will stand out from the following description of a number of particular embodiments of an apparatus according to the invention for attaching a thermoplastic insert to a thermoplastic hollow body ; this description is intended only as an example and is in no way limitative as regard the invention ; the reference numbers given refer to the enclosed drawings.
Figure 1 is a diagrammatic representation of a rotation casting installation with a mould in which a hollow body can be formed, and a specific embodiment of an apparatus, according to the invention, for attaching an insert to this hollow body.
Figure 2 is, on a larger scale, a representation of the longitudinal section of the apparatus illustrated in figure 1, the apparatus being set in a first position.
Figure 3 is the same section as that in figure 2, except that the apparatus is now set in a second position.
Figure 4 is a longitudinal section of another embodiment of the apparatus, in accordance with the invention, where the apparatus is in the same position as that represented in figure 2.
Figure 5 is a partial cross-section of a hollow body with insert, in accordance with the invention.

In the various figures, the same reference numbers refer to the same or corresponding elements.

The invention concerns a method for attaching an insert made of thermoplastic or at last partly of thermoplastic material in a hollow body which is likewise at least partly thermoplastic and preferably totally thermoplastic, such as a drum or tank, etc., whereby molten thermoplastic material is used to form the hollow body and the insert is brought into close contact with the thermoplastic material at the appropriate place whilst the latter is cooling and at a time when it is still somewhat above its weakening temperature, so that that part of the insert which comes into contact with the still-soft thermoplastic material is in turn briefly heated up above its weakening temperature. This part of the insert thereby fuses with the thermoplastic material of the hollow body, resulting in a very secure bonding without using any separate adhesive material or mechanical form of fixing, such as screws, etc.

More specifically, therefore, this is a method whereby the thermoplastic material, of which the hollow body should be produced, is melted in a mould or applied to the mould in a ready-molten state, before being spread in the appropriate way over the inner walls of this mould in a layer of almost uniform thickness and then solidified or left to solidify against these inner walls, while at the same time the insert is brought into close contact with the still-molten thermoplastic material at the appropriate place in the mould, after which the hollow body of thermoplastic material with the attached insert is removed from the mould as soon as it is sufficiently hard and unalterable.

In accordance with the invention, it is preferred to ensure that, initially, the insert is placed in the mould at a specific distance from the still-molten thermoplastic material so that it suffers substantially no deformation as a result of the heat emitted by the said material and possibly the mould itself. At a second stage, while the thermoplastic material is cooling and solidifying, the insert is brought into close contact with the latter whilst it is still sufficiently soft so that, through the surface melting of the part of the insert which comes into contact the the thermoplastic material, a substantially homogeneous whole comprising the insert and hollow body is obtained. Finally, at a third stage, once the solidification is completed and the thermoplastic material has cooled to a sufficient extent to prevent any deformation, the hollow body with the attached insert is removed from the mould.

An appropriate method is used to provide support for the insert during the first and second stages of the process, using removable supporting elements, preferably made of thermal insulating material and which grip the insert tightly, so that it can remain largely undeformed during these two stages, even if it does become rather soft due to the heat in the mould.

Thanks, however, to the use of a supporting element made of thermal insulating material, it is usually possible, using this invention, to maintain the insert below the weakening temperature of the thermoplastic material of which it is made at the time when the thermoplastic material of which the hollow body itself is to be moulded is being melted or maintained in a molten state.

During the second stage, that is when the liquid thermoplastic material has been uniformly spread over the inner wall of the mould, and the mould and consequently the material spread over its walls are being cooled, at a point in time when the thermoplastic material has cooled to a point just above its weakening temperature, the insert is brought into close contact with the thermoplastic material in such a way that, owing to the still plastic qualities of this thermoplastic material and also to its relatively high temperature, a very tight adhesion is obtained between the still-soft hollow body and the insert, so that at the point of contact they fuse to form a homogeneous whole.

An ideal method of moulding this hollow body from molten thermoplastic material in a mould is the so-called rotation casting technique. This technique involves heating a closed mould containing the necessary quantity of powdered or granular thermoplastic material, in an oven whilst simultaneously rotating it around two axes set at right angles to one another so that the thermoplastic material which is melting inside the mould is distributed evenly over the inner wall of the mould. As soon as the liquid thermoplastic material is sufficiently and evenly distributed over this inner wall, the mould is removed from the oven while the rotating movement over the two axes is maintained until the thermoplastic material is completely hard against the inner wall of the mould, the mould is then opened and the hollow body of thermoplastic material thereby obtained is removed.

Another technique, which may also be applied to the method used with this invention, is the so-called "Rock and Roll" casting technique which differs from the rotation casting technique described above insofar as the mould only rotates on a substantially horizontal axis, which forms the longitudinal axis of the mould, and rocks through an angle of 30° on a horizontal axis which is at right angles to this longitudinal axis. This rocking movement ensures that the powdered or granular thermoplastic material is distributed throughout the length of the mould, while, due to the rotation on the horizontal longitudinal axis, an even distribution over the total circumference of the mould is also obtained. Gas burners, which are mounted along the full length of the mould, heat it up in order to melt the thermoplastic material inside.

This technique is especially useful in moulding hollow moulds of relatively large dimensions, in particular when the length is much greater than the width.

As has been indicated above, the insert is thermally insulated at a sufficient distance from the inner wall of the mould in an appropriate way during the first stage of the process to ensure that it does not melt or become deformed.

It may also be useful during the first stage to gradually cool the insert, preferably with air, which could, for example, circulate through the supporting element.

More specific characteristics of the method used according to the invention will be illustrated below in the description of an apparatus which can be used for applying this method, reference being made to the enclosed figures as mentioned above.

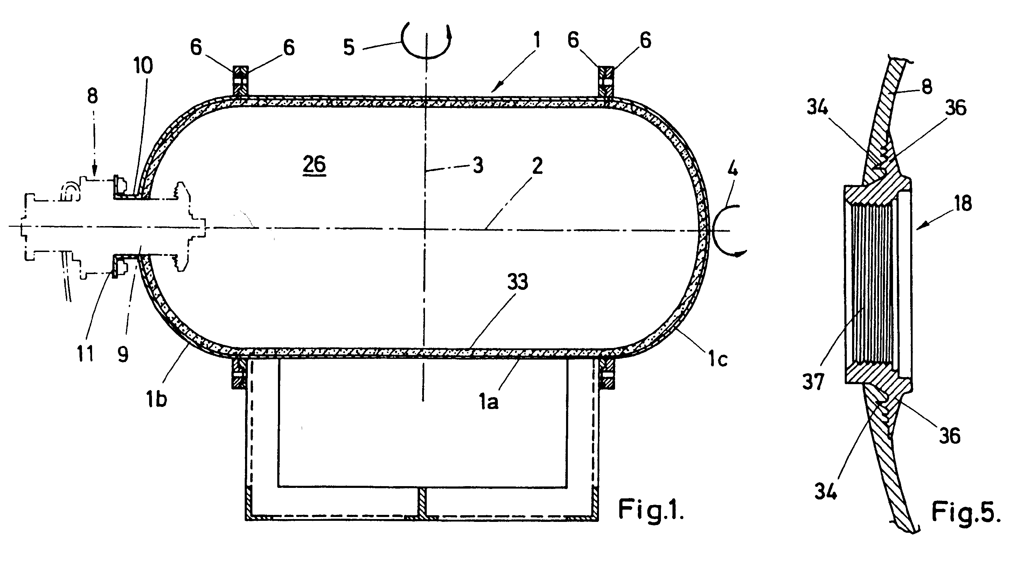

Figure 1 is a diagrammatic representation of mould 1 which can rotate on its horizontal longitudinal axis 2 and its vertical axis 3, as indicated by arrows 4 and 5 respectively, Mould 1 consists of three separate components : a cylindrical middle section 1a, an elliptical top section 1b and an elliptical bottom section 1c. These three parts, 1a, 1b and 1c, are fitted with flanges 6 on their connecting edges, so that they can be attached to one another by means of nuts and bolts (not illustrated).

Figure 1 does not show the drive mechanism, which is known as such, for creating these two rotating movements, and also the oven for heating up the mould and melting the thermoplastic material.

Figure 1 shows a mould for the production of cylindrical pressure vessels, both ends of which are convex and at one end of which a connection opening should be provided, the axis of which matches the longitudinal axis of the drum and therefore the longitudinal axis 2 of the mould 1.

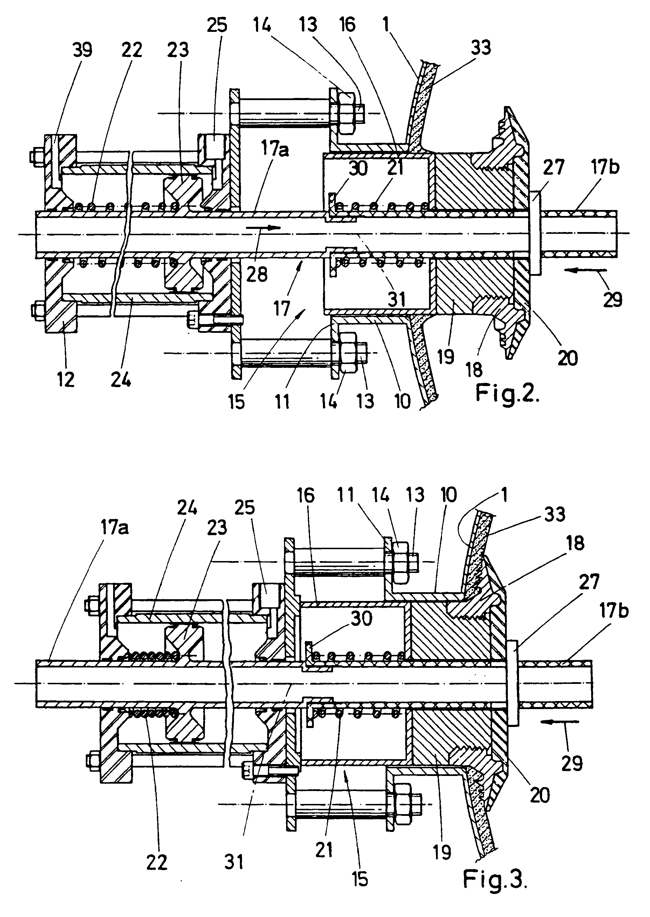

In general, the apparatus according to the invention consists, as is shown in more detail in figures 2 and 3, of a mechanism 8, on which an insert 18 can be mounted inside the mould 1, in which the hollow body, and more specifically the pressure vessel, can be moulded and by means of which this insert can be maintained, when in a first position, at a specific distance from the inner wall of the mould 1 and, in a second position, can be brought into close contact with the body made of thermoplastic material which forms a layer against this inner wall.

The top section 1b of the mould has a circular opening 9, bordered by an externally raised rim 10, which is fitted with a flange 11.

The mechanism 8 also comprises a frame 12 which, with the bolts 13 with the attached screws 14, can be securely attached to the mould 1 by means of flange 11, over the opening 9 where the insert 18 is to be attached to the pressure vessel produced in the mould 1, and also a moving part attached to this frame 12, with a connecting piece 16 which can be slid into the opening 9 through the raised rim 10, and a support 17 which projects through the guiding piece 16 on which insert 18 is mounted.

In a first embodiment of the apparatus, in accordance with the invention, which is presented in more detail in figures 2 and 3, the support consists of a tube 17 which, in line with the axis of the opening 9, extends through the opening and the connecting piece 16 and on which the insert 18, which is held between two supporting elements 19 and 20 and the insert 18 held between them, are elastically pressed against one another, and a removable locking pin 27 attached to the free end of the tube in the mould holds these different parts in position against the working of the spring 21. This spring 21 is stretched between a flange 30 on the tube 17 and the guiding piece 16.

In this particular embodiment a second helicoïdal spring 22 is wound around that part of the tube 17 which protrudes from the mould 1, this spring coming into contact with one side of a piston 23 attached to this tube. This piston can be moved to and fro in a cylinder 24 which is fixed to frame 12. This cylinder 24 has a supply inlet 25 on the side opposite that of the piston 23, through which liquid or gas under pressure can enter the cylinder. In this way, tube 17 can be moved on its axis in the direction as indicated by arrow 28, towards the inside of the mouldd 1 by means of spring 22 and, in the opposite direction, indicated by arrow 29, by means of gas or liquid under pressure in the cylinder 24 supplied through opening 25, against the action of the spring 22.

The tube 17 is open at both ends, in order to allow the inner space 26 of the mould to have contact with the outside atmosphere.

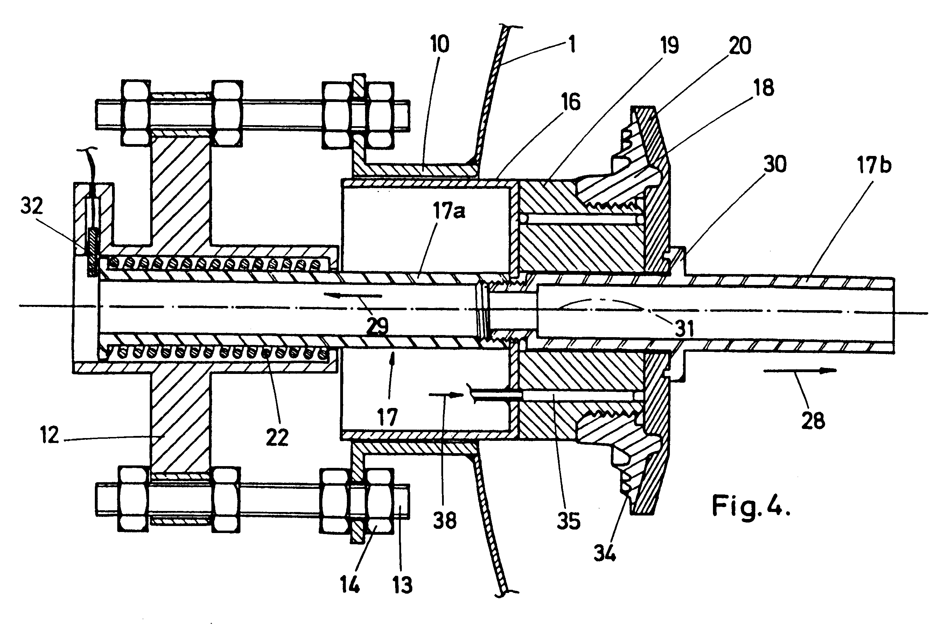

Furthermore, this tube consists of two separate parts, 17a and 17b, which are screwed together lengthways in position 31 and which, when unscrewing them, allow the movable part 15 of the said mechanism 8 of the insert to be removed. By introducing compressed air into the cylinder through an inlet 39, the tube 17 moves in the direction of arrow 28, while insert 18 is already affixed to the drum, so that the locking pin 27 comes free and falls from the tube. Figure 4 illustrates a somewhat different embodiment of the apparatus in accordance with the invention.

This embodiment differs from the embodiment represented in figures 2 and 3, mainly due to the fact that the apparatus can be operated manually as well as pneumatically. The former embodiment could only be operated pneumatically.

Furthermore, it comprises a system for cooling the insert which can be applied to the first stage of the method according to the invention, as described above.

This second embodiment also uses just one spring 22 which, when in the extended position, as illustrated in figure 4, allows the insert 18 to be maintained in position one. The movable parts, that is the guiding piece 16, the supporting elements 19 and 20 and the insert 18 can be pressed one against the other by screwing together parts 17a and 17b of tube 17.

Spring 22 is held in the extended position by means of a removable locking pin 32 in such a way that, when this pin is removed, tube 17, due to the action of this spring, can move in the direction of arrow 29, thereby bringing the insert to the second position.

A description is provided below of the working of the versions of the apparatus according to the invention as presented in figures 1 to 3.

At an initial stage, the necessary quantities of powdered and granulated thermoplastic material for the production of hollow body, such as a drum, are added to the mould 1 and the apparatus in accordance with the invention, more specifically mechanism 8 described above, with the insert 18 attached to flange 11, is attached around the opening 9 of mould 1 by means of bolts 13 and nuts 14 in such a way that insert 18 with supporting elements 19 and 20, by which it is gripped, is held at a specific distance from the inner wall of the mould, as illustrated in figure 2.

Mould 1, with the attached mechanism 8, is then put into the oven to melt the thermoplastic material while the mould is subjected to a double rotation on the axes 2 and 3. In this way, a layer 33 of substantially uniform thickness of this liquid thermoplastic material is formed against the inner wall of the mould, as is clearly illustrated in figure 1 and even in figure 2, which shows part of the mould 1 with layer 33 on a larger scale.

The distance between the insert 18 and this layer 33 is such that this insert is not deformed as a result of the heat emitted by the molten layer of thermoplastic material. The presence of a supporting element 19 of thermal insulating material also prevents a thermal bridge forming between insert 18 and guiding piece 16, the latter, as is the mould itself, being composed mostly of metal.

It should also be mentioned that, when in the position as illustrated in figure 2, the guiding piece 16 forms a stop for opening 9, which penetrates the mould 1 to a depth which is at least equal to that of the thickness of the layer of thermoplastic material in order to prevent the material from passing through the opening 9.

This therefore constitutes the first stage of the method according to the invention with the apparatus for the application of this method in the corresponding first position.

The mould 1 is then removed from the oven, the rotating motion continuing while it is cooled in the air so that the layer of thermoplastic material gradually begins to harden.

Compressed air is at this moment pumped into cylinder 24 through inlet 25, so that piston 23 and therefore also tube 17 move in the direction of arrow 29 until the insert 18 is pressed against the layer of still soft thermoplastic material 33.

This constitutes the second stage of the method according to the invention, whereby the apparatus is in the second position, as illustrated in figure 3.

In this embodiment of the invention, the insert consists of a connection or link, with an internal thread 37, designed for the drum as produced in the mould 1 (fig. 5).

This connection or link is fitted with a collar 36 with teeth or ribs 35. In the second position, the teeth or ribs 35 are brought into contact with the still soft plastic layer 33 by means of pistons 23 and, owing to the still relatively high temperature of this layer, the teeth or ribs melt as does the surface of the collar 36 which comes into contact with this layer 33, so that when it cools and solidifies a very firm adhesion is obtained between layer 33 and the insert 18.

Another important feature of the invention is that, contrarily to existing methods of fixing an insert to a hollow body, this insert is attached to the inner wall of the corresponding opening in the hollow body. Consequently, whenever a certain pressure exists in the hollow body, the insert is pressed tighter up against the wall of this body, thereby eliminating any risk of leaks occuring between the hollow body and the insert.

If, instead of the rotation casting technique, the "Rock and Roll" casting technique described above is used, the procedure for attaching the insert to the wall of the hollow body is substantially the same, using the same apparatus as that used with the rotating casting technique.

When the embodiment illustrated in figure 4 is used, the procedure described below is followed.

The insert 18, in the first position as described above, is held in the mould as illustrated in figure 4.

At this moment, the spring 22 is held in an extended position by means of locking pin 31.

During the second or cooling stage, this locking pin is removed manually, pneumatically or in any other way, so that spring 22 relaxes and tube 17 moves in the direction of arrow 29 until this brings the guiding piece 16 into contact with the frame 12. This contact is adjusted so that the teeth or ribs 34 press into the soft layer 33 and fuse to just the right degree.

The rest of the cycle is the same as that as described above.

Owing to the cooling channel 35 in the supporting element 19, cold air, as indicated by arrow 38, can be directed into this element 19 during the first stage in order to control the temperature of insert 18.

The thermoplastic material of which the hollow body is moulded, as well as that forming the insert should preferably be polyethylene, although the method and apparatus can, of course, be adapted to all other kinds of thermoplastic material.

The invention is, in any case, not limited to the embodiments as described above and, within the scope of this invention, several other changes can be considered, including the technique used for moulding the hollow body of thermoplastic materila, the nature, shape and function of the insert and the position in which this is fitted to the hollow body. In this way, various inserts, whether of the same kind or otherwise, can be attached to the same hollow body.

## Claims

1. Method for attaching an insert (18), at least partly composed of thermoplastic material, in an at least partly hollow body, more specifically a drum, also composed mainly of thermoplastic material, which is produced according to the so called "rotation casting technique" or "Rock and Roll" casting technique in a mould (1) either by melting the thermoplastic material in the mould (1) or adding it to the mould in a ready-molten state and, after having spread the molten thermoplastic material in a layer (33) over the inner walls of this mould (1) in the appropriate way, solidifying it or leaving it to solidify in order to subsequently remove the body of thermoplastic material thereby obtained from the mould, characterized in that, during a first stage, the insert (18) is positioned in the mould (1) at a specific distance from the still-molten thermoplastic material, ensuring that it suffers no substantial deformation as a result of the presence of this material and, at a second stage, while the thermoplastic material of which the hollow body is being moulded is solidifying, bringing the insert (18) into close contact with the thermoplastic material while it is still sufficiently soft, so that the latter can form substantially a whole with the insert (18) and, at a third stage, when the aforementioned material is almost solid, removing the body with the attachement insert (18) from the mould.

2. Method according to claim 1, characterized in that the insert (18) is at least partly supported during the aforementioned first and second stages by at least one detachable supporting element (19,20) which fits closely against the insert (18), in order to ensure that this insert (18) suffers no substantial deformation during these two stages.

3. Method according to claim 2, characterized in that a support element (19,20) is used which is composed mainly of thermal insulating material.

4. Method according to any of claims 1 to 3, characterized in that, during the first stage, the insert (18) is maintained constantly below the softening temperature of the thermoplastic material, of which the insert (18) is at least partly composed and, during the second stage, while the thermoplastic material, of which the hollow body is being moulded, is solidifying and when it has cooled to just above the aforementioned softening temperature, the insert is brought into close contact with the thermoplastic material of the aforementioned hollow body.

5. Method according to anyone of claims 1 to 4, characterized in that, during the first stage, the insert (18) is thermally insulated at a sufficient distance from the inner wall of the mould (1) so that it does not come into contact with the still-molten thermoplastic material from which the hollow body is moulded.

6. Method according to anyone of claims 1 to 5, characterized in that, during the first stage, the insert (18) is at least partly cooled, by air for example.

7. Method according to any one of claims 1 to 6, characterized in that an insert (18) is used which has teeth or ribs (34) which, during the second stage, are pressed into the thermoplastic material.

8. Method according to anyone of claims 1 to 7, characterized in that an insert (18) is used which is fitted with a collar (36) which, during this second stage, fits closely against the inner surface of the layer of thermoplastic material (33) covering the inner wall of the mould and from which the hollow body is mainly produced.

9. Method according to claim 8, characterized in that a cylindrical insert (18) with an internal thread is used which partly penetrates the layer (33) and the outer contour of which is fitted with the aformentioned collar (36).

10. Apparatus for applying the method according to anyone of claims 1 to 9, characterized in that it comprises a mechanism (8) on which the insert (18) can be mounted in a detachable manner inside the mould (1) wherein the at least partly hollow body can be formed, whereby, when the mechanism is in a first position, the insert (18) can be held by the mechanism at a certain distance from the inner wall of the mould (1) and, in a second position, the insert (18) can be brought into close contact with the body of thermoplastic material moulded against this inner wall, means being provided which, in the first position, allow the insert to be positioned in the mould in such a way as to ensure that it suffer no substantial deformation as a result of the presence of the still-molten thermoplastic material, and also means enabling the mechanism (8) and the insert (18) to be detached from one another, once the latter has formed a rigid whole with the solidified thermoplastic material.

11. Apparatus according to claim 10, characterized in that the mechanism (8) comprises, at the one hand, a frame (12) which can be securely fixed with respect to the outside of the mould (1), close to the place where the insert (18) is to be fitted to the hollow body around an opening (9) provided in the mould (1) and, on the other hand, a movable part with a guiding piece (16) attached to this frame (12) which can be slid into this opening (9) and a support (17) which projects through this guiding piece (16) on which the said insert (18) can be mounted and by means of which, when the part which moves on the frame (12) is in a first position, this insert (18) can be held in the mould (1) in the aforementioned first position at a specific distance from the inner wall of the mould and, in aforementioned second position, has been brought up against this inner wall.

12. Apparatus according to claim 11, characterized in that two supporting elements (19,20) are provided on the support between which the insert(18) can be clamped.

13. Apparatus according to claim 11, characterized in that the guiding piece (16) forms a stop which fits into the opening (9) to a depth which is at least equal to the thickness of the layer of thermoplastic material (33) which is spread over the inner wall of the mould (1) in order to produce the hollow body.

14. Apparatus according anyone of claims 10 to 13, characterized in that the support (17) comprises a rod which projects substantially in line according to the axis of the aforementioned opening (9) through the guiding piece (16) and on which the latter and the insert (18), by means of at least one supporting element (19,20) for this insert (18), can be mounted closely to each other in a substantially co-axial relationship, the said rod (17), together with the guiding piece (16) and insert (18) mounted on it, being axially mounted on the frame (12) in such a way as to be movable between the first and second positions.

15. Apparatus according to anyone of claims 11 to 14 characterized in that the support (17) cooperates with an elastic element (21) which allows the insert (18) to move in the direction of the opening (9) in the mould (1) to the second position.

16. Apparatus according to claim 15, characterized in that the aforementioned elastic element(21) cooperates with a piston (23), attached to the support (17) which is mounted so that it can move to and fro inside a cylinder (24) which is mounted on the frame, in such a way that, owing to the action of liquid or gas which is added under pressure to the cylinder (24), the piston (23) and therefore the support (17) moves between the two extreme positions against the action of the elastic element (21).

17. Apparatus according to anyone of claims 14 to 16, characterized in that the guiding piece (16) is pushed up against the supporting element (19,20) by means of an elastic element (21,22).

18. Apparatus according to anyone of claims 12 to 17, characterized in that the rod (17) of the support consists of a tube which is open at both ends, in order to allow the inner space (26) of the mould to be in contact with the outside air.

19. Apparatus according to anyone of claims 14 to 18, characterized in that the rod (17) consists of two separate parts which can be screwed into one another lenghtways (17a) and (17b) so that, when these parts are unscrewed, the movable part of the mechanism (8) can be detached from the insert (18).

20. Apparatus according to anyone of claims 12 to 19, characterized in that at least one of the supporting elements (19,20) has a cooling channel (35) through which air can be blown.

## Patentansprüche

1. Verfahren zum Befestigen eines Einsatzes (18), der zumindest teilweise aus thermoplastischem Material besteht, in einem zumindest teilweise hohlen Körper, insbesondere in einer Trommel die ebenfalls im wesentlichen aus thermoplastischem Material besteht, das man mit Hilfe der sogenamte Drehgiesstechnik oder der "Rock and Roll" Giesstechnik, in einer Form (1) entweder durch Schmelzen des thermoplastischen Materials in der Form (1) oder durch Einbringen in diese Form in einem fertiggeschmolzenen Zustand erzeugt und, nachdem man das geschmolzene thermoplastische Material in einer Schicht (33) an den Innenwänden dieser Form (1) auf angemessene Art und Weise verteilt hat, dieses zum Erstarren bringt oder erstarren lässt, um anschliessend den so erzeugten Körper aus thermoplastischem Material aus der Form zu entnehmen, dadurch gekennzeichnet, dass, in einer ersten Phase, der Einsatz (18) in der Form (1) in einem bestimmten Abstand vom noch geschmolzenen thermoplastischen Material angeordnet ist, wobei dafür gesort wird, dass es keine erhebliche Verformung infolge der Gegenwart dieses Materials erleidet und, in einer zweiten Phase, während des Erstarrens des thermoplastischen Materials, aus dem der Hohlkörper geformt wird, der Einsatz (18) in nahe Berührung mit dem thermoplastischen Material gebracht wird, solange dieses noch weich genug ist, so dass das letztere im wesenlichen ein Ganzes met dem Einsatz (18) bilden kann und, in einer dritten Phase, wenn das vorerwähnte Material fast starr ist, der Körper mit dem Befestigungseinsatz (18) aus der Form entnommen wird.

2. Verfahren gemäss Anspruch 1, dadurch gekennzeichnet, dass der Einsatz (18) zumindest teilweise während der vorerwähnten Phasen eins und zwei von mindestens einem abnehmbaren Stützteil (19, 20) gehalten wird, das eng am Einsatz (18) anliegt, damit gewährleistet wird, dass dieser Einsatz (18) während dieser beiden Phasen keine wesentliche Verformung erleidet.

3. Verfahren gemäss Anspruch 2, dadurch gekennzeichnet, dass ein Stützteil (19, 20) verwendet wird, das im wesentlichen aus wärmeisolierendem Material besteht.

4. Verfahren gemäss einem beliebigen der Ansprüche 1 bis 3, dadurch gekennzeichnet, dass der Einsatz (18), in der ersten Phase, ständig unter der Erweichungstemperatur des thermoplastischen Materials gehalten wird, aus dem der Einsatz (18) mindestens teilweise besteht und, in der zweite Phase, während das thermoplastische Material erstarrt, aus dem der Hohlkörper geformt wird und gerade bis oberhalb der vorerwähnten Erweichungstemperatur abgekühlt ist, in enge Berührung mit dem thermoplastischen Material des vorerwähnten Hohlkörpers verbracht wird.

5. Verfahren gemäss einem beliebigen der Ansprüche 1 bis 4, dadurch gekennzeichnet, dass der Einsatz (18), in der ersten Phase, in einem angemessenen Abstand von der Innenwand der Form (1) so wärmeisoliert wird, dass er nicht mit dem noch geschmolzenen thermoplastischen Material in Berührung gelangt, aus dem der Hohlkörper gebildet wird.

6. Verfahren gemäss einem beliebigen der Ansprüche 1 bis 5, dadurch gekennzeichnet, dass der Einsatz (18), in der ersten Phase, zumindest teilweise abgekühlt, beispielsweise luftgekühlt wird.

7. Verfahren gemäss einem beliebigen der Ansprüche 1 bis 6, dadurch gekennzeichnet, dass ein Einsatz (18) verwendet wird, der Zähne oder Rippen (34) aufzeigt, die in der zweiten Phase in das thermoplastische Material eingedrückt werden.

8. Verfahren gemäss einem beliebigen der Ansprüche 1 bis 7, dadurch gekennzeichnet, dass ein Einsatz (18) verwendet wird, der mit einer Manschette (36) versehen ist, die in dieser zweiten Phase eng an der Innenfläche der Schicht aus thermoplastischem Material (33) anliegt, das die Innenwand der Form bedeckt und aus dem der Hohlkörper im wesentlichen hergestellt wird.

9. Verfahren gemäss Anspruch 8, dadurch gekennzeichnet, dass ein zylinderförmiger Einsatz (18) mit einem Innengewinde verwendet wird, welcher teilweise in die Schicht (33) eindringt und dessen Aussenumfang mit der vorerwähnten Manschette (36) versehen ist.

10. Gerät zur Anwendung des Verfahrens gemäss einem beliebigen der Ansprüche 1 bis 9, dadurch gekennzeichnet, dass es einen Mechnismus (8) umfasst, an dem der Einsatz (18) im Innern der Form (1) abnehmbar angebracht werden kann, in welcher der Hohlkörper geformt werden soll, wodurch der Einsatz (18), wenn der Mechanismus sich in einem ersten Stand befindet, vom Mechanismus in einem bestimmten Abstand von der Innenwand der Form (1) gehalten werden kann und, in einem zweiten Stand, der Einsatz (18) in enge Berührung mit dem Körper aus thermoplastischem Material an dieser Innenwand verbracht werden kann, wobei Vorrichtungen vorgesehen sind, mit denen der Einsatz sich im ersten Stand in der Form so positionieren lässt, dass dafür gesorgt wird, dass er keine wesentliche Verformung im Ergebnis der Gegenwart des noch geschmolzenen thermoplastischen Materials erleidet, sowie Vorrichtungen, met deren Hilfe der Mechanismus (8) und der Einsatz (18) voneinander getrennt werden können, sobald der letztere ein starres Ganzes mit dem erstarrten plastischen Material bildet.

11. Gerät gemäss Anspruch 10, dadurch gekennzeichnet, dass der Mechanismus (8), einerseits, einen Rahmen (12) umfasst, der in bezug auf die Aussenseite der Form (1) befestigt werden kann, und zwar nahe an der Stelle, an welcher der Einsatz (18) am Hohlkörper um eine Öffnung (9) in der Form (1) zu befestigen ist und, andererseits ein bewegliches Teil mit einem Führungsteil (16), das an diesem Rahmen befestigt ist, welches in diese Öffnung (9) eingeführt werden kann, und eine Halterung (17), die durch dieses Führungsteil (16) ragt, an dem der vorerwähnte Einsatz (18) angebracht werden kann und mit dessen Hilfe dieser Einsatz (18), wenn das sich am Rahmen (12) bewegende Teil in einem ersten Stand ist, in der Form (1) im vorerwähnten Stand in einem bestimmten Abstand von der Innenwand der Form gehalten werden kann und, im vorerwähnten zweiten Stand, in Berührung mit dieser Innenwand verbracht worden ist.

12. Gerät gemäss Anspruch 11, dadurch gekennzeichnet, dass die beiden Stützteile (19, 20) an der Halterung so ausgebildet sind, dass der Einsatz (18) dazwischen festgeklemmt werden kann.

13. Gerät gemäss Anspruch 11, dadurch gekennzeichnet, dass das Führungsteil (16) einen Anschlag bildet, der in die Öffnung (9) bis zu einer Tiefe passt, die zumindest der Dicke der Schicht aus thermoplastischem Material (33) entspricht, die an der Innenwand der Form (1) im Hinblick auf die Erzeugung des Hohlkörper verteilt wird.

14. Gerät gemäss einem beliebigen der Ansprüche 10 bis 13, dadurch gekannzeichnet, dass die Halterung (17) einen Stab umfasst, der im wesentlichten in einer Linie met der Achse der vorerwächnten öffnung (9) durch das Führungsteil (16) ragt, und an dem das letztere and der Einsatz (18) mit der Hilfe von zumindest einem Stützteil (19, 20) dieses Einsatzes (18), nahe beieinander und in einer, im wesentlichen koaxialen Beziehung zueinander angebracht werden können, wobei der vorerwähnte Stab (17) zusammen mit dem daran angebrachten Führungsteil (16) und Einsatz (18) axial am Rahmen so angebracht sind, dass sie sich zwischen dem ersten und dem zweiten Stand bewegen lasse.

15. Gerät gemäss einem beliebigen der Ansprüche 11 bis 14, dadurch gekennzeichnet, dass die Halterung (17) mit einem elastischen Bauteil (21) zusammenwirkt, das es dem Einsatz (18) ermöglicht, sich in der Richtung der öffnung (9) in der Form (1) bis in den zweiten Stand zu bewegen.

16. Gerät gemäss Anspruch 15, dadurch gekennzeichnet, dass das vorerwähnte elastische Bauteil (21) met einem Kolben (23) zusammenwirkt, der an der Halterung (17) befestigt und so angebracht ist, dass er sich in einem Zylinder (24) hin- und herbewegen kann, der am Rahmen angebracht ist, und zwar so, dass unter der Einwirkung der Flüssigkeit oder des Gases, das unter Druck in den Zylinder (24) eingebracht wird, der kolben (23) und damit die Halterung (17) sich zwischen den beiden Aussenpositionen und gegen die Einwirkung des elastischen Teils (21) bewegen.

17. Gerät gemäss einem beliebigen der Ansprüche 14 bis 16, dadurch gekennzeichnet, dass das Führungsteil (16) mit der Hilfe eines elastischen Teils (21, 22) gegen das Stützteil (19, 20) hochgeschoben wird.

18. Gerät gemäss einem beliebigen der Ansprüche 12 bis 17, dadurch gekennzeichnet, dass der Stab (17) der Halterung aus einem Rohr besteht, das an beiden Enden offen ist, um dem Innenraum (26) der Form den Kontakt mit der Aussenluft zu ermöglichen.

19. Gerät gemäss einem beliebigen der Ansprüche 14 bis 18, dadurch gekennzeichnet, dass der Stab (17) aus zwei separaten Teilen besteht, die längsweise ineinander geschraubt werden können (17a) und (17b), so dass das bewegliche Teil des Mechanismus (8) nach dem Auseinanderschrauben dieser Teile, vom Einsatz (18) getrennt werden kann.

20. Gerät gemäss einem beliebigen der Ansprüche 12 bis 19, dadurch gekennzeichnet, dass zumindest der Stützteile (19, 20) einen Kühlungskanal (35) aufzeigt, durch den Luft geblasen werden kann.

## Revendications

1. Procédé de fixation d'une pièce rapportée (18), constituée au moins partiellement d'une matière thermoplastique, dans un corps au moins partiellement creux, plus particulièrement un réservoir, aussi constitué principalement de matière plastique, qui est réalisé, suivant la soi-disante technique de moulage par rotation ou la technique de moulage dite "Rock and Roll", dans un moule (1) soit en fondant la matière thermoplastique dans le moule (1) soit en l'ajoutant dans un état déjà fondu au moule et, après avoir étendu d'une manière appropriée en une couche (33) la matière thermoplastique fondue sur les parois internes de ce moule (1), en la solidifiant ou en la laissant solodifier afin de retirer postérieurement du moule le corps en matière thermoplastique obtenu par ce moyen, caractérisé en ce que, pendant une première étape, la pièce rapportée est positionnée dans le moule (1) à une distance particulière de la matière thermoplastique toujours fondue, en assurant qu'elle ne subit aucune déformation sensible par suite de la présence de cette matière, et en ce que, dans une deuxième étape, tandis que se solidifie la matière thermoplastique dans laquelle le corps creux est en cours de moulage, la pièce rapportée (18) est mise en contact intime avec le matière thermoplastique, pendant qu'elle est encore suffisamment molle, de façon que celle-ci puisse former sensiblement un tout avec la pièce rapportée (18) et en ce que, dans une troisième étape, lorsque la matière précitée est quasi solide, le corps avec la pièce rapportée fixée (18) est retiré du moule.

2. Procédé suivant la revendication 1, caractérisé en ce que la pièce rapportée (18) est au moins partiellement supportée, pendant les première et deuxième étapes précitées, par au moins un élément porteur détachable (19,20) qui s'ajuste intimement contre la pièce rapportée (18) afin d'assurer que cette pièce rapportée (18) ne subisse aucune déformation sensible pendant ces deux étapes.

3. Procédé suivant la revendication 2, caractérisé en ce qu'on utilise un élément porteur (19,20) qui est constitué principalement en matière thermiquement isolante.

4. Procédé suivant l'une quelconque des revendications 1 à 3, caractérisé en ce que, pendant la première étape, la pièce rapportée (18) est maintenue constamment en dessous de la température de ramollissement de la matière thermoplastique dont la pièce rapportée (18) est au moins partiellement constituée, et en ce que, pendant la deuxième étape, tandis que se solidifie la matière thermoplastique dans laquelle le corps creux est en cours de moulage et lorsqu'elle a refroidi juste au-dessus de la température de ramollissage précitée, la pièce rapportée est mise en contact intime avec la matière thermoplastique du corps creux précité.

5. Procédé suivant l'une quelconque des revendications 1 à 4 caractérisé en ce que, pendant la première étape, la piéce rapportée (18) est thermiquement isolée à une distance suffisante de la paroi interne du moule (1) de sorte qu'elle n'entre pas en contact avec la matière thermoplastique encore fondue dans laquelle est moulé le corps creux.

6. Procédé suivant l'une quelconque des revendications 1 à 5, caractérisé en ce que, pendant la première étape, la pièce rapportée (18) est au moins partiellement refroidie, par exemple par de l'air.

7. Procédé suivant l'une quelconque des revendications 1 à 6, caractérisé en ce qu'on utilise une pièce rapportée (18) qui présente des dents ou des nervures (34) qui sont pressées dans la matière thermoplastique pendant la deuxième étape.

8. Procédé suivant l'une quelconque des revendication 1 à 7, caractérisé en ce qu'on utilise une pièce rapportée (18) qui est munie d'un collet (36) qui, pendant la deuxième étape, s'ajuste intimement contre la surface interne de la couche de matière thermoplastique (33) qui couvre la paroi interne du moule et dans laquelle est réalisé en grande partie le corps creux.

9. Procédé suivant la revendication 8, caractérisé en ce qu'on utilise une pièce rapportée cylindrique (18) avec un filet interne qui pénètre partiellement dans la couche (33) et dont le contour externe est muni du collet précité (36).

10. Dispositif pour la mise en oeuvre du procédé suivant l'une quelconque des revendications 1 à 9, caractérisé en ce qu'il comporte un mécanisme (8) sur lequel la pièce rapportée (18) peut être montée d'une manière détachable dans le moule (1) dans lequel le corps au moins partiellement creux peut être formé, en ce que, par ce moyen, lorsque le mécanisme est dans une première position la pièce rapportée (18) peut être maintenue par le mécanisme à une certaine distance de la paroi interne du moule (1), en ce que dans une seconde position, la pièce rapportée (18) peut être mise en contact intime avec le corps de matière thermoplastique moulée contre cette paroi interne, et en ce qu'on prévoit des moyens qui, dans la première position, permettent à la pièce rapportée d'être positionnée dans le moule de manière à assurer qu'elle ne subit aucune déformation sensible par suite de la présence de la matière thermoplastique encore ramollie et aussi des moyens qui permettent au mécanisme (8) et à la pièce rapportée (18) d'être détachés l'un de l'autre dès que cette dernière a formé un tout rigide avec la matière thermoplastique solidifiée.

11. Dispositif suivant la revendication 10, caractérisé en ce que le mécanisme (8) comporte, d'une part, un châssis (12) qui peut être fixé fermement par rapport à l'extérieur du moule (1), près de la place où la pièce rapportée (18) doit être fixée au corps creux autour d'une ouverture (9) prévue dans le moule (1) et, d'autre part, un élément mobile avec une pièce de guidage (16) qui est fixée à ce châssis (12) et qui peut être glissée dans cette ouverture (9), et un support (17) qui fait saillie au travers de cette pièce de guidage (16), sur lequel peut être montée la pièce rapportée (18) et au moyen duquel, lorsque l'élément qui se déplace sur le châssis (12) est dans une première position, la pièce rapportée (18) peut être maintenue dans le moule (1) dans la première position précitée, à une distance particulière à partir de la paroi interne du moule et, dans la seconde position précitée, a été amenée contre la paroi interne.

12. Dispositif suivant la revendication 11, caractérisé en ce qu'on prévoit sur le support deux éléments porteurs (19, 20) entre lesquels peut être serrée la pièce rapportée (18).

13. Dispositif suivant la revendication 11, caractérisé en ce que la pièce de guidage (16) forme un arrêt qui s'adapte dans l'ouverture (9), à une profondeur qui est au moins égale à l'épaisseur de la couche de matière thermoplastique(33) qui est étendue sur la paroi interne du moule (1) afin de réaliser le corps creux.

14. Dispositif suivant l'une quelconque des revendications 10 à 13, caractérisé en ce que le support (17) comporte une tige qui s'étend en grande partie en alignement suivant l'axe de l'ouverture (9) précitée, au travers de la pièce de guidage (16), et sur laquelle cette dernière et la pièce rapportée (18) peuvent être montées, au moyen d'au moins un élément porteur (19, 20) pour cette pièce rapportée (18), intimement l'une contre l'autre dans un rapport sensiblement coaxial, ladite tige (17) avec la pièce de guidage (16) et la pièce rapportée (18) qui sont montées sur la tige étant axialement montées sur le châssis (12) de manière à pouvoir être déplacées entre les première et seconde positions.

15. Dispositif suivant l'une quelconque des revendications 11 à 14, caractérisé en ce que le support (17) coopère avec un élément élastique (21) qui permet à la pièce rapportée (18) d'être déplacée en direction de l'ouverture (9) dans le moule (1) jusqu'à la seconde position.

16. Dispositif suivant la revendication 15, caractérisé en ce que l'élément élastique (21) précité coopère avec un piston (23) qui est fixé au support (17) et qui est monté de façon qu'il puisse être déplacé en va-et-vient à l'intérieur d'un cylindre (24), qui est monté sur le châssis, de manière qu'en raison de l'action d'un liquide ou d'un gaz qui est ajouté sous pression dans le cylindre (24) le piston (23) et en conséquence le support (17) soient déplacés entre les deux positions extrêmes, à l'encontre de l'action de l'élément élastique (21).

17. Disposition suivant l'une quelconque des revendications 14 à 16, caractérisé en ce que la pièce de guidage (16) est poussée au moyen d'un élément élastique (21, 22) contre l'élément porteur (19, 20).

18. Dispositif suivant l'une quelconque des revendications 12 à 17, caractérisé en ce que la tige (17) du support est constituée par un tube qui est ouvert aux deux extrémités afin de permettre à l'espace interne (26) du moule d'être en contact avec l'air extérieur.

19. Dispositif suivant l'une quelconque des revendications 14 à 18, caractérisé en ce que la tige (17) est constituée de deux éléments séparés qui peuvent être vissés l'un dans l'autre longitudinalement (17a) et (17b) de sorte que, lorsque ces éléments sont dévissés, l'élément mobile du mécanisme (8) puisse être détaché de la pièce rapportée (18).

20. Dispositif suivant l'une quelconque des revendications 12 à 19, caractérisé en ce qu'au moins un des éléments porteurs (19, 20) comporte un canal de refroidissement (35) au travers duquel peut être soufflé de l'air.
